# EUROPEAN PATENT SPECIFICATION

(11) **EP 3 396 684 B1**
(45) Date of publication and mention of the grant of the patent: **30.06.2021**
(21) Application number: 16878437.9
(22) Date of filing: 12.12.2016
(51) Int. Cl.: B32B 7/12, B32B 27/08, B32B 27/18, B32B 27/20, B32B 27/36, B32B 27/40, B32B 27/28, H01B 3/42, H01B 17/60, H01B 7/08, H01B 7/295, H01B 3/30

(54) **INSULATING SHEET AND FLAT CABLE**
ISOLIERUNGSFOLIE UND FLACHKABEL
FEUILLE ISOLANTE ET CÂBLE PLAT

(30) Priority: 24.12.2015 JP 2015251466
(43) Date of publication of application: 31.10.2018
(73) Proprietor: Sumitomo Electric Industries, Ltd., Osaka-shi, Osaka 541-0041 (JP)
(72) Inventor: FUKUDA, Yutaka, Osaka-shi Osaka 554-0024 (JP); MATSUDA, Tatsuo, Kanuma-shi Tochigi 322-8585 (JP)
(74) Representative: Boult Wade Tennant LLP
(86) International application number: PCT/JP2016/086868
(87) International publication number: WO 2017/110546

(56) References cited:
- WO-A1-2011/129323
- JP-A- H0 859 786
- JP-A- H07 179 557
- JP-A- 2001 076 550
- JP-A- 2008 117 609
- JP-A- 2009 249 472
- JP-A- 2009 249 472
- JP-A- 2013 040 286
- US-A1- 2013 020 118
- US-B2- 8 524 815

## Description

### Technical Field

The present invention relates to an insulating sheet and a flat cable. The present invention claims priority to Japanese Patent Application No. 2015-251466 filed December 24, 2015.

### Background Art

Flat cables are used as electrical wires for internal wiring in electronic devices. A flat cable is produced by, for example, a method that involves interposing multiple conductors, which are arranged side-by-side, between a pair of coverings and then combining them by heating or the like.

In recent years, flat cables have been increasingly used in a high temperature environment such as in automobile parts etc. Coverings of the flat cables used in such an environment are required to have heat resistance that prevents peeling-off in a high temperature environment and high flame retardance as well as insulation and softness.

In order to meet these needs, an insulating film that uses a thermoplastic polyurethane elastomer as a main component has been suggested (refer to Japanese Unexamined Patent Application Publication No. 2008-117609).

### Citation List

### Patent Literature

PTL 1: Japanese Unexamined Patent Application Publication No. 2008-117609

### Summary of Invention

### Solution to Problem

An insulating sheet according to one aspect of the present invention includes a substrate film having insulation; and a resin layer stacked on a first surface side of the substrate film, in which the resin layer contains a resin component that contains a thermoplastic polyurethane elastomer as a main component, and a flame retardant; the thermoplastic polyurethane elastomer has a shore A hardness of 80 or more; and an amount of the flame retardant contained relative to 100 parts by mass of the resin component is 40 parts by mass or more and 100 parts by mass or less, the resin component in the resin layer contains a copolyester, and an amount of the copolyester in the resin component is 1 mass% or more and 50 mass% or less, the glass transition temperature (Tg) of the copolyester is -80°C or more and 50°C or less, and the storage modulus of the resin layer at 150°C is 0.5 MPa or more and 500 MPa or less.

A flat cable according to another aspect of the present invention includes a plurality of strip-shaped conductors arranged in parallel to one another; and a pair of insulating sheets that cover both surfaces of each of the conductors and each include a resin layer in contact with the conductors, in which at least one of the pair of insulating sheets is the insulating sheet according to Claim 1.

### Brief Description of Drawings

[Fig. 1] Fig. 1 is a schematic cross-sectional view of an insulating sheet according to an embodiment of the present invention.
[Fig. 2] Fig. 2 is a schematic cross-sectional view of a flat cable according to an embodiment of the present invention.

### Description of Embodiments

### [Problem to be solved by the invention]

The insulating film of the patent literature described above has flame retardance and achieves some degree of heat resistance; however, the heat resistance at a temperature as high as 150°C has not been guaranteed.

The present invention has been made under the above-described circumstances and aims to provide an insulating film having excellent heat resistance and flame retardance, and a flat cable equipped with the insulating film.

### [Advantageous effects of the present disclosure]

The insulating sheet according to the present invention has excellent heat resistance and flame retardance. Moreover, since the flat cable according to the present invention is equipped with the insulating sheet, the flat cable has excellent heat resistance and flame retardance.

### [Description of the embodiments of the invention]

An insulating sheet according to an embodiment of the present invention includes a substrate film having insulation and a resin layer stacked on a first surface side of the substrate film. The resin layer contains a resin component that contains a thermoplastic polyurethane elastomer as a main component, and a flame retardant. The thermoplastic polyurethane elastomer has a Shore A hardness of 80 or more. The amount of the flame retardant contained relative to 100 parts by mass of the resin component is 40 parts by mass or more and 100 parts by mass or less.

The inventors of the present invention have found that the heat resistance of the resin layer can be significantly improved by using, as a main component of the resin component, a thermoplastic polyurethane elastomer (TPU) having a Shore A hardness equal to or higher than a particular value and by adding a particular amount of the flame retardant to the resin component. In other words, the insulating sheet has excellent heat resistance and flame retardance because the insulating sheet is equipped with a resin layer that contains, as a main component of the resin component, a TPU having a Shore A hardness of 80 or more and contains a flame retardant in an amount within the above-described range. Although the mechanism behind this is not clear, it is presumed that because a TPU having a hardness equal to or higher than a particular value has a large number of molecules that are three-dimensionally linked, movement of the atoms at high temperature is suppressed due to such three-dimensional linking, thereby improving the heat resistance.

Moreover, the insulating sheet is easy to store since the main component of the resin component in the resin layer is a thermoplastic elastomer, and there is no need to add a curing agent. Moreover, since curing by irradiation with an ionizing radiation or ultraviolet radiation is also not necessary, and expensive production facilities are not needed, which is advantageous for the production cost.

The resin component in the resin layer contains a copolyester, and the amount of the copolyester in the resin component is 1 mass% or more and 50 mass% or less. As such, when the resin component in the resin layer contains a copolyester in an amount within the above-described range, adhesion to the metal conductor can be imparted to the resin layer; thus, when the insulating sheet is used in a flat cable or the like, the peel strength can be improved while maintaining the heat resistance and flame retardance.

The copolyester is preferably crystalline, and the melting point thereof is preferably 100°C or higher and 200°C or lower. Since the copolyester is crystalline, the strength, heat resistance, and chemical resistance, etc., of the resin layer are improved. Moreover, since the copolyester contained in the resin layer is crystalline, a film-shaped resin layer can be easily formed by extrusion. In addition, since the melting point is within the above-described range, the adhesion to metal conductors can be improved.

The substrate film may contain, as a main component, polyimide, polyphenylene sulfide, polyester, or a liquid crystal polymer. When any of these resins is used as the main component of the substrate film, the heat resistance, mechanical strength, etc., of the substrate film can be enhanced.

The resin layer preferably contains an inorganic pigment. When the resin layer contains an inorganic pigment, the heat resistance of the resin layer can be further enhanced, and the design property of the sheet can be enhanced.

A flat cable according to another aspect of the present invention includes a plurality of strip-shaped conductors arranged in parallel to one another, and a pair of insulating sheets that cover both surfaces of each of the conductors and each include a resin layer in contact with the conductors, in which at least one of the pair of insulating sheets is the insulating sheet described above.

Since at least one of the pair of insulating films is the insulating sheet described above, the flat cable has excellent heat resistance and flame retardance.

Here, the "insulation" means when a plurality of conductors (for example, conductor length is 100 mm) are placed in parallel to one another on a subject layer and the insulation resistance (for example, the applied voltage is 0.5 kV) between adjacent conductors is measured, the insulation resistance is 1.0 × 10⁹ Ω or higher. The "main component" means the component that is contained in the largest amount on a mass basis (for example, 50 mass% or more). The "Shore A hardness" refers to the hardness measured with a type-A durometer in accordance with JIS-K 7311 (1995). The "crystalline" means that there is a melting point. The "melting point" refers to the endothermic peak temperature detected with a differential scanning calorimeter (DSC) at the time of melting during the first temperature elevation.

### [Detailed description of embodiments of invention]

The insulating sheet and flat cable according to the embodiments of the present invention will now be described in detail with reference to the drawings.

### [Insulating sheet]

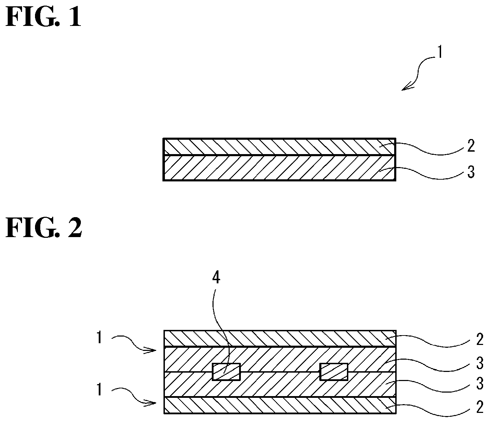

An insulating sheet 1 illustrated in Fig. 1 mainly includes a substrate film 2 having insulation, and a resin layer 3 stacked on a first surface side of the substrate film 2. The insulating sheet 1 may further include an adhesive layer between the substrate film 2 and the resin layer 3.

### <Substrate film>

The main component of the substrate film 2 may be any insulation material but is preferably a synthetic resin; and from the viewpoints of heat resistance and mechanical strength, polyimide, polyphenylene sulfide, polyester, and a liquid crystal polymer are preferable.

The lower limit of the average thickness of the substrate film 2 is preferably 10 µm, more preferably 15 µm, and yet more preferably 20 µm. Meanwhile, the upper limit of the average thickness of the substrate film 2 is preferably 500 µm, more preferably 300 µm, and yet more preferably 100 µm. When the average thickness is smaller than the lower limit, the strength and the insulation of the insulating sheet 1 may be degraded. Conversely, when the average thickness exceeds the upper limit, the insulating sheet 1 becomes too thick and the softness of a flat cable that uses the insulating sheet 1 may be degraded.

The substrate film 2 preferably has flame retardance. Specifically, the value of the limiting oxygen index (LOI) of the substrate film 2 measured in accordance with JIS-K 7201-1 (1999) is preferably 20 or more and more preferably 22 or more. An example of the method for imparting flame retardance to the substrate film 2 is a method that involves adding a flame retardant to the substrate film 2. Examples of the flame retardant are the same as those for the flame retardant to be contained in the resin layer 3 described below.

The substrate film 2 may contain various additives in addition to the flame retardant.

### <Resin layer>

The resin layer 3 is a layer stacked on a first surface side of the substrate film 2 and contains a resin component that contains a thermoplastic polyurethane elastomer as a main component, and a flame retardant. This resin layer 3 bonds the insulating sheet 1 to conductors 4 of a flat cable, as illustrated in Fig. 2.

The resin component in the resin layer 3 is composed of resin. The resin component in the resin layer 3 preferably contains, in addition to the thermoplastic polyurethane elastomer, a copolyester from the viewpoint of improving adhesion to the conductors, etc. Moreover, the resin layer 3 preferably contains an inorganic pigment. The resin layer 3 may contain other additives such as an antioxidant and a hydrolysis inhibitor in addition to the resin component, the flame retardant, and the inorganic pigment.

### (Thermoplastic polyurethane elastomer)

A thermoplastic elastomer is a polymer that has a soft segment having elasticity, and a hard segment that binds molecules and prevents plastic deformation. A thermoplastic polyurethane elastomer is a thermoplastic elastomer having a urethane group (-NH-COO-), and, for example, is synthesized through a reaction between a high-molecular-weight diol (long chain diol), a low-molecular-weight diol (short chain diol), and a diisocyanate. The long chain diol forms a soft segment, and the short chain diol and the diisocyanate form a hard segment.

Examples of the long chain diol include polypropylene glycol (PPG), polytetramethylene glycol (PTMG), poly(butylene adipate) diol (PBA), poly-ε-caprolactone diol (PCL), poly(hexamethylene carbonate) diol (PHC), poly(ethylene/1,4-adipate) diol, and poly(1,6-hexylene/neopentylene adipate) diol.

Examples of the short chain diol include 1,4-butanediol, 1,6-hexanediol, and 1,4-bis (2-hydroxyethoxy)benzene.

Examples of the diisocyanate include 4,4'-diphenylmethane diisocyanate, hexamethylene diisocyanate, isophorone diisocyanate, and 4,4'-dicyclohexylmethane diisocyanate.

The lower limit of the Shore A hardness of the thermoplastic polyurethane elastomer constituting the resin component in the resin layer 3 is 80, preferably 88, more preferably 92, and yet more preferably 98. When the Shore A hardness is smaller than the lower limit, the heat resistance and flame retardance of the insulating sheet 1 may become insufficient. Although the upper limit of the Shore A hardness of the thermoplastic polyurethane elastomer is not particularly limited, the upper limit is, for example, 100.

The hardness of the thermoplastic polyurethane elastomer can be adjusted through the proportion of the hard segment.

The lower limit of the melt flow rate (MFR) of the thermoplastic polyurethane elastomer at a temperature of 210°C under a load of 2160 g is preferably 0.1 g/10 minutes and more preferably 0.5 g/10 minutes. The upper limit of the MFR is preferably 100 g/10 minutes and more preferably 50 g/10 minutes. When the MFR is smaller than the lower limit, extrudability may be degraded. In contrast, when the MFR exceeds the upper limit, the mechanical strength etc., of the resin layer 3 may become insufficient.

The lower limit of the amount of the thermoplastic polyurethane elastomer contained in the resin component in the resin layer 3 is preferably 50 mass% and more preferably 55 mass%. Meanwhile, the upper limit of the amount of the thermoplastic polyurethane elastomer contained in the resin component is preferably 100 mass%, more preferably 80 mass%, and yet more preferably 70 mass%. When the amount of the thermoplastic polyurethane elastomer contained in the resin component is smaller than the lower limit, the heat resistance and flame retardance of the insulating sheet 1 may become insufficient. Conversely, when the amount of the thermoplastic polyurethane elastomer contained in the resin component exceeds the upper limit, for example, the effect of the copolyester for improving the adhesion to the conductors described below may become insufficient.

The lower limit of the amount of the thermoplastic polyurethane elastomer contained in the entire resin layer 3 is preferably 30 mass% and more preferably 35 mass%. Meanwhile, the upper limit of the amount of the thermoplastic polyurethane elastomer contained in the entire resin layer 3 is preferably 70 mass%, more preferably 60 mass%, and yet more preferably 50 mass%. When the amount of the thermoplastic polyurethane elastomer contained in the entire resin layer 3 is smaller than the lower limit, the heat resistance and flame retardance of the insulating sheet 1 may become insufficient. Conversely, when the amount of the thermoplastic polyurethane elastomer contained in the entire resin layer 3 exceeds the upper limit, for example, the effect of the copolyester for improving the adhesion to the conductors described below may become insufficient.

### (Copolyester)

A copolyester is a polyester obtained by polycondensation between a polycarboxylic acid component and a polyalcohol component, and at least one of the polycarboxylic acid component and the polyalcohol component contains two or more compounds.

The copolyester used in the resin layer 3 may be a saturated copolyester having no unsaturated group or an unsaturated copolyester having an unsaturated group, but is preferably a saturated copolyester. The unsaturated group refers to a group that contains a functional group that contains a carbon-carbon double bond or carbon-carbon triple bond, which can cause a radical polymerization reaction under irradiation with an ionizing radiation.

The copolyester may be crystalline or non-crystalline (amorphous), but is preferably crystalline. Moreover, the resin component in the resin layer 3 may contain two or more copolyesters, and a mixture of a crystalline polyester and an amorphous polyester may also be used.

When the copolyester is crystalline, the lower limit of the melting point is preferably 100°C, more preferably 120°C, and yet more preferably 125°C. Meanwhile, the upper limit of the melting point is preferably 200°C, more preferably 180°C, and yet more preferably 140°C.

When the melting point is lower than the lower limit, the effect of the copolyester for improving the adhesion to the conductors in a high temperature environment may become insufficient. Conversely, when the melting point exceeds the upper limit, it may become difficult to form the resin layer 3.

The lower limit of the glass transition temperature (Tg) of the copolyester is -80°C and preferably -70°C. Meanwhile, the upper limit of the glass transition temperature is 50°C and preferably 30°C. When the glass transition temperature is lower than the lower limit, the mechanical strength etc., may become insufficient. Conversely, when the glass transition temperature exceeds the upper limit, the effect of the copolyester for improving the adhesion to the conductors may become insufficient. Note that the glass transition temperature refers to the midpoint glass transition temperature measured in accordance with JIS-K-7121 (2012).

The lower limit of the number average molecular weight of the copolyester is preferably 20000 and more preferably 25000. The upper limit of the number average molecular weight is preferably 40000 and more preferably 36000. When the number average molecular weight is lower than the lower limit, it may become difficult to form the resin layer 3. Conversely, when the number average molecular weight exceeds the upper limit, the effect of the copolyester for improving the adhesion to the conductors may become insufficient. Note that the number average molecular weight refers to a value measured by gel permeation chromatography (GPC) in accordance with JIS-K-7252-1 (2008).

The lower limit of the amount of the copolyester contained in the resin component in the resin layer 3 is preferably 1 mass%, more preferably 15 mass%, and yet more preferably 30 mass%. Conversely, the upper limit of the amount of the copolyester contained in the resin component is preferably 50 mass% and more preferably 45 mass%. When the amount of the copolyester is smaller than the lower limit, the effect for improving the adhesion to the conductors may become insufficient. Conversely, when the amount of the copolyester content exceeds the upper limit, the heat resistance and flame retardance of the insulating sheet 1 may become insufficient.

### (Flame retardant)

The flame retardant improves the flame retardance of the resin layer 3. A known flame retardant can be employed as the flame retardant, and examples thereof include phosphorus-based flame retardants, nitrogen-based flame retardants, halogen-based flame retardants, and antimony-based flame retardants. The flame retardants may be used alone, or two or more flame retardants may be used in combination.

Examples of the phosphorus-based flame retardants include cyclic organophosphorus compounds such as 9,10-dihydro-9-oxa-10-phosphaphenanthrene-10-oxide;
phosphoric acid esters such as triphenyl phosphate and bisphenol A bis(diphenyl)phosphate; and
ammonium polyphosphate, aluminum polyphosphate, and aluminum phoshinate.

Examples of the nitrogen-based flame retardants include melamine resins and melamine cyanurates.

Examples of the halogen-based flame retardants include chlorine-based flame retardants such as chlorinated paraffins, chlorinated polyethylenes, chlorinated polyphenyls, and perchloropentacyclodecane; and
bromine-based flame retardants such as ethylene bispentabromobenzene, ethylene bispentabromodiphenyl, tetrabromoethane, tetrabromobisphenol A, hexabromobenzene, decabromobiphenyl ether, tetrabromophthalic anhydride, poly(dibromophenylene oxide), hexabromocyclodecane, and ammonium bromide.

Examples of the antimony-based flame retardants include antimony trioxide, antimony trichloride, antimony borate, and antimony molybdate.

The halogen-based flame retardants and antimony-based flame retardants are preferable and the bromine-based flame retardants are more preferable as the flame retardant.

The lower limit of the amount of the flame retardant contained relative to 100 parts by mass of the resin component in the resin layer 3 is 40 parts by mass, preferably 50 parts by mass, and more preferably 55 parts by mass. Meanwhile, the upper limit of the amount is 100 parts by mass, preferably 80 parts by mass, and more preferably 70 parts by mass. When the amount is smaller than the lower limit, it may be difficult to improve the flame retardance of the resin layer 3. In contrast, when the amount exceeds the upper limit, the adhesion strength between the resin layer 3 and the conductors etc., may be degraded.

### (Inorganic pigment)

The resin layer 3 preferably contains an inorganic pigment from the viewpoints of promoting improvements in heat resistance and flame retardance, and improving the design property. The inorganic pigment is not particularly limited, and an example thereof is a carbon material such as carbon black.

The lower limit of the amount of the inorganic pigment contained relative to 100 parts by mass of the resin component in the resin layer 3 is preferably 0.1 parts by mass and more preferably 0.3 parts by mass. Meanwhile, the upper limit of the amount is preferably 5 parts by mass and more preferably 1 part by mass. When the amount is smaller than the lower limit, it may be difficult to improve the heat resistance and the flame retardance of the resin layer 3. Conversely, when the amount exceeds the upper limit, the adhesion strength between the resin layer 3 and the conductors etc., may be degraded.

### (Other additives)

The antioxidant prevents oxidation of the TPU and the copolyester, and thereby improves the heat resistance of the resin layer 3. Known antioxidants can be used as the antioxidant, and examples thereof include hindered phenol antioxidants such as pentaerythritol tetrakis[3-(3,5-di-t-butyl-4-hydroxyphenyl)propionate], thiodiethylene bis[3-(3,5-di-t-butyl-4-hydroxyphenyl)propionate], and octadecyl-3-(3,5-di-t-butyl-4-hydroxyphenyl)propionate;
sulfur-based antioxidants such as ditridecyl-3,3'-thiodipropionate, dilauryl-3,3'-thiodipropionate, and bis[2-methyl-4-(3-n-alkylthiopropionyloxy)-5-t-butylphenyl] sulfide; and
amine-based antioxidants such as 4,4'-di-(α,α,-dimethylbenzyl)diphenylamine. Among these, amine-based antioxidants are preferable. The antioxidants may be used alone, or two or more antioxidants may be used in combination.

For example, polycarbodiimide can be used as the hydrolysis inhibitor.

The upper limit of the amount of other components contained relative to 100 parts by mass of the resin component in the resin layer 3 is 15 parts by mass, preferably 10 parts by mass, and more preferably 5 parts by mass.
When the amount exceeds the upper limit, the adhesion strength between the resin layer 3 and the conductors etc., may be degraded.

### (Properties of the resin layer)

The lower limit of the storage modulus of the resin layer 3 at 150°C is 0.5 MPa and preferably 1 MPa. Meanwhile, the upper limit of the storage modulus is 500 MPa and preferably 300 MPa. When the storage modulus is smaller than the lower limit, the heat resistance and the flame retardance of the resin layer 3 may become insufficient. Conversely, when the storage modulus exceeds the upper limit, the adhesion to the conductors etc., may become insufficient. Note that the storage modulus is a value measured in accordance with the description of JIS-K 7244-4 (1999) under conditions of 150°C, a frequency of 10 Hz, and a strain of 0.08%.

The lower limit of the average thickness of the resin layer 3 is preferably 10 µm and more preferably 25 µm.
Meanwhile, the upper limit of the average thickness is preferably 100 µm and more preferably 80 µm.
When the average thickness is smaller than the lower limit, the adhesion strength between the resin layer 3 and the conductors etc., may be degraded. In contrast, when the average thickness exceeds the upper limit, the insulating sheet 1 becomes too thick, and the size-reduction of the flat cable that uses the insulating sheet 1 may become difficult.
As illustrated in Fig. 1, the substrate film 2 and the resin layer 3 may be directly stacked on top of each other; alternatively, another layer, such as an adhesive layer or the like, may be stacked therebetween.

### <Adhesive layer>

When an adhesive layer is used to bond the substrate film 2 and the resin layer 3, a known adhesive can be used as the adhesive that constitutes the adhesive layer; for example, an adhesive containing polyester as a main component or a polyurethane adhesive containing a polyol as a main component and an isocyanate as a curing agent is suitable for the use. The amount of the curing agent contained in the polyurethane adhesive relative to 100 parts by mass of the main component is, for example, 10 parts by mass or more and 20 parts by mass or less.

Moreover, the average thickness of the adhesive layer can be, for example, 1 µm or more and 10 µm or less.

### <Method for producing insulating sheet>

Examples of the method for producing the insulating sheet 1 include a method that involves directly extruding a resin-layer-forming composition onto a substrate film 2, a method that involves forming a film-shaped resin layer 3 by extrusion of a resin-layer-forming composition, then superimposing this film-shaped resin layer 3 onto a substrate film 2, and performing heat lamination, and a method that involves bonding the film-shaped resin layer 3 and a substrate film 2 with an adhesive. Among these, from the viewpoint of preventing entry of bubbles between the substrate film 2 and the resin layer 3, a dry lamination method that involves bonding a film-shaped resin layer 3 and a substrate film 2 with an adhesive is preferable.

The resin-layer-forming composition can be prepared by mixing a thermoplastic polyurethane elastomer, a flame retardant, and optional components. Examples of a mixer used in mixing include an open roll and a kneader. Alternatively, an extruder, such as a twin screw kneading extruder, may be used for mixing.

An example of the extrusion method used in the method that involves extruding the resin-layer-forming composition onto the substrate film 2 or the method that involves forming a film-shaped resin layer 3 by extruding the resin-layer-forming composition is a melt-extruding method. Examples of the melt-extruding method include a T-die method and an inflation method; among these, the T-die method is preferable.

When the film-shaped resin layer 3 and the substrate film 2 are to be heat-laminated, the upper limit of the lamination temperature is preferably 190°C and more preferably 170°C. Meanwhile, the lower limit of the lamination temperature is preferably 100°C and more preferably 120°C. When the lamination temperature exceeds the upper limit, the substrate film 2 and the resin layer 3 may thermally deform. Conversely, when the lamination temperature is lower than the lower limit, the substrate film 2 and the resin layer 3 may not be sufficiently bonded.

### <Advantages>

The insulating sheet 1 has excellent heat resistance and flame retardance because the insulating sheet 1 is equipped with a resin layer 3 that contains, as a main component of the resin component, a TPU having a Shore A hardness of 80 or more and contains a flame retardant in an amount within the above-described range.

### [Flat cable]

A flat cable illustrated in Fig. 2 includes strip-shaped conductors 4 that are arranged in parallel to one another, and a pair of insulating sheets 1 that cover both surfaces of each of the conductors 4 and each include a resin layer in contact with the conductors 4. Furthermore, the substrate films 2 of the pair of insulating sheets 1 are positioned on the sides opposite from the conductors 4 with respect to the resin layers 3. Note that the same elements and the like as those of the insulating sheet 1 illustrated in Fig. 1 are denoted by the same reference signs, and the descriptions therefor are omitted to avoid redundancy.

The conductors 4 are strip-shaped, held between the pair of insulating sheets 1, and arranged along the longitudinal direction of the flat cable.

The main component of the conductors 4 is, for example, a conductive metal, such as copper, tin-plated annealed copper, or nickel-plated annealed copper. The conductors 4 are preferably conductive metal foils, more preferably plated conductive metal foils, and yet more preferably plated annealed copper. The average thickness of the conductors 4 may be determined according to the amount of the current used, and, for example, is set to 20 µm or more and 150 µm or less when the conductors 4 are foils.

Since at least one of the pair of insulating sheets is the insulating sheet 1 described above, the flat cable has excellent heat resistance and flame retardance.

Of the pair of insulating sheets of the flat cable, one may be an insulating sheet other than the insulating sheet 1. A known insulating sheet may be used as this insulating sheet.

When both of the pair of insulating sheets are the insulating sheets described above, the components and average thickness of the substrate film and the resin layer, etc., may be the same or different between the insulating sheets, but are preferably the same. As such, when the pair of insulating sheets have the same chemical properties and mechanical properties, various properties become uniform between a first surface side and a second surface side of the flat cable. As a result, the strength and the like of the flat cable are further improved.

### <Method for producing flat cable>

The flat cable is obtained by a production method that mainly includes a step of stacking a pair of insulating sheets onto both surfaces of conductors arranged in parallel to one another (hereinafter this step may be referred to as the "stacking step"). This flat cable production method may further include a step of bonding the conductors and the pair of insulating sheets (hereinafter this step may be referred to as the "bonding step"). Although the bonding step is usually performed after the stacking step, the bonding step and the stacking step may be performed simultaneously.

### (Stacking step)

In the stacking step, a pair of insulating sheets 1 are stacked on both surfaces of the conductors 4 that are arranged side-by-side in parallel to one another.
An example of the stacking method is a method that involves placing the conductors 4 on the resin layer 3 of one insulating sheet 1 so that the conductors 4 are in parallel to one another, and then superimposing the other insulating sheet 1 on the top thereof so that the resin layers 3 lie on the conductor 4 side.

### (Bonding step)

In the bonding step, the pair of insulating sheets 1 and the conductors 4 are bonded. An example of the bonding method is a method that involves holding the conductors 4 between a pair of insulating sheets 1 and performing heating with a thermal laminator or the like from both surfaces. The thermal laminator or the like may be any known device.

### [Other embodiments]

The embodiments disclosed herein are illustrative in all respects and should not be considered to be limiting. The scope of the present invention is not limited to the features of the embodiments described above, and is intended to include all modifications and alterations defined by the claims and within the meaning and scope equivalent to the claims.

The insulating sheet can be used in usages other than the flat cable. Since the insulating sheet has excellent heat resistance and flame retardance, the insulating sheet is suitable for use as a coverlay stacked on a surface of a conduction pattern of a printed circuit board or a base film.

### EXAMPLES

The present invention will now be described in further detail through examples below which do not limit the present invention.

### [Preparation of resin-layer-forming composition]

Compounds used to prepare a resin-layer-forming composition are as follows.

### (Thermoplastic polyurethane elastomer)

TPU1: Polycarbonate-based ("PANDEX T9290N" produced by DIC Covestro Polymer Ltd., Shore A hardness: 90)
TPU2: Ester-based ("Elastollan (registered trademark) C95A50" produced by Badische Anilin und Soda Fabrik, Shore A hardness: 95)
TPU3: Ester-based ("Elastollan (registered trademark) C85A50" produced by Badische Anilin und Soda Fabrik, Shore A hardness: 85)
TPU4: Ether-based ("Elastollan (registered trademark) ET860D50" produced by Badische Anilin und Soda Fabrik, Shore D hardness: 60 (equivalent to a Shore A hardness of 100))
TPU5: Ether-based ("RESAMINE P2275" produced by Dainichiseika Color & Chemicals Mfg. Co., Ltd., Shore A hardness: 75)

### (Copolyester)

PE1: Saturated copolyester (Tg: -70°C, melting point: 126°C, molecular weight: 35000) PE2: Saturated copolyester (Tg: 20°C, melting point: 185°C, molecular weight: 30000)
PE3: Saturated copolyester (Tg: 19°C, melting point: 143°C, molecular weight: 25000)

### (Other resins)

Maleic anhydride-modified polypropylene (melting point: 140°C)

### (Flame retardant)

Flame retardant 1: Ethylene bispentabromobenzene ("SAYTEX (registered trademark) 8010" produced by Albemarle Corporation)
Flame retardant 2: Antimony trioxide (produced by NIHON SEIKO CO., LTD.)
Flame retardant 3: Phosphorus-based ("EXOIT (registered trademark) OP930" produced by Clariant)
Flame retardant 4: Melamine cyanurate ("MC6000" produced by NISSAN CHEMICAL INDUSTRIES, LTD.)

### (Other additives)

### Pigment (carbon black)

Antioxidant ("NAUGARD 445" produced by Chemtura Corporation)
Hydrolysis inhibitor ("CARBODILITE (registered trademark) LA-1" produced by Nisshinbo Chemical Inc.)

Resin-layer-forming compositions A to K were prepared by using the above-described materials at blend ratios described in Table 1. In Table 1, "-" indicates that the corresponding compound was not used. The storage modulus of each of the resin-layer-forming compositions was measured in accordance with the description in JIS-K 7244-4 (1999) under the conditions of 150°C, a frequency of 10 Hz, and a strain of 0.08%, and the results are indicated in Table 1. For the compositions I to K, melting occurred at 150°C, and the storage modulus could not be measured.

**[Table 1]**

| | | Composition A | Composition B | Composition C | Composition D | Composition E | Composition F | Composition G | Composition H | Composition I | Composition J | Composition K |
|---|---|---|---|---|---|---|---|---|---|---|---|---|
| Blend (parts by mass) | TPU1 | 60 | 60 | 100 | 100 | 60 | - | - | - | - | - | - |
| | TPU2 | - | - | - | - | - | 60 | - | - | - | - | - |
| | TPU3 | - | - | - | - | - | - | 60 | - | - | - | - |
| | TPU4 | - | - | - | - | - | - | - | 60 | - | - | - |
| | TPU5 | - | - | - | - | - | - | - | - | 60 | - | - |
| | PE1 | 40 | 15 | - | - | 40 | 40 | 40 | 40 | 40 | - | - |
| | PE2 | - | 25 | - | - | - | - | - | - | - | - | - |
| | PE3 | - | - | - | - | - | - | - | - | - | 100 | - |
| | Maleic anhydride-modified PP | - | - | - | - | - | - | - | - | - | - | 100 |
| | Flame retardant 1 | 40 | 60 | 60 | 40 | - | - | 60 | 60 | 60 | 60 | 60 |
| | Flame retardant 2 | - | - | - | 20 | - | - | - | - | - | - | 20 |
| | Flame retardant 3 | - | - | - | - | 40 | 40 | - | - | - | - | - |
| | Flame retardant 4 | - | - | - | - | 20 | 20 | - | - | - | - | - |
| | Pigment | 0.5 | 0.5 | 0.5 | 0.5 | 0.5 | 0.5 | 0.5 | 0.5 | 0.5 | 0.5 | 0.5 |
| | Antioxidant | 2 | 2 | 2 | 2 | 2 | 2 | 2 | 2 | 2 | 2 | 2 |
| | Hydrolysis inhibitor | 2 | 2 | 2 | 2 | 2 | 2 | - | - | - | - | - |
| 150°C storage modulus (MPa) | | 5.6 | 177 | 43.0 | 32.0 | 22.0 | 25.0 | 3.1 | 12.0 | Melted | Melted | Melted |

### [Preparation of insulating sheet]

Insulating sheets of Examples 1 to 10 and Comparative Examples 1 to 3 were prepared from the resin-layer-forming compositions A to K and substrate films of polyimide (PI), polyphenylene sulfide (PPS), polyethylene terephthalate (PET), and a liquid crystal polymer (LCP), by bonding one of the substrate films and a resin layer by one of the methods described below.
(1) A method involving directly extruding a resin-layer-forming composition onto a substrate film.
(2) A method involving forming a film-shaped resin layer by extrusion of a resin-layer-forming composition, then superimposing this film-shaped resin layer onto a substrate film, and performing heat lamination.
(3) A method involving bonding a film-shaped resin layer, which is formed by the same method as in (2) above, and a substrate film with an adhesive.

### [Preparation of flat cable]

Forty conductors arranged at 0.5 mm pitches were placed between resin layers of a pair of insulating sheets of one of Examples 1 to 10 and Comparative Examples 1 to 3, the insulating sheets being arranged so that the resin layers were on the inner side and faced each other. The conductors were strip-shaped annealed copper foils (average thickness: 35 µm, average width: 0.3 mm) plated with nickel. A stack constituted by the two insulating sheets and the conductors was thermally press-bonded at 160°C by using a laminator (hot roll), and flat cables of Examples 1 to 10 and Comparative Examples 1 to 3 were obtained. Examples 5 and 8 are not according to the invention.

### <Flame test>

The flame retardance of each of the flat cables was evaluated according to UL1581 VW-1. Those which passed the evaluation of UL1581 VW-1 were rated "A" and those which failed the evaluation were rated "B". The evaluation results are indicated in Table 2.

### <Adhesion strength to conductors>

A perforated window was formed in one of the insulating sheets of each flat cable; the conductor exposed in this window was peeled at 180° from the other insulating sheet at a speed of 100 mm/min and the peel strength at this time was determined in accordance with JIS-K 6854-2 (1999) "Adhesives - Determination of peel strength of bonded assemblies - Part 2: 180° peel"; and the results was assumed to be the index of the adhesion strength to the conductors. The measurement results are indicated in Table 2.

### <Delamination test (1)>

Whether or not peeling-off occurred in the insulating sheet after being left to stand still in a circulating hot-air constant-temperature oven at 150°C for 3000 hours was confirmed. Those free of peeling-off or cracks were rated "A", those in which bubbles were generated in some part were rated "B", and those with peeling-off or cracks were rated "C". The evaluation results are indicated in Table 2.

### <Delamination test (2)>

Whether or not peeling-off occurred in the insulating sheet after being left to stand still at a temperature of 85°C and a relative humidity of 85% for 1000 hours was confirmed. Those free of peeling-off or cracks were rated "A", those in which bubbles were generated in some part were rated "B", and those with peeling-off or cracks were rated "C". The evaluation results are indicated in Table 2.

### <Delamination test (3)>

Whether or not peeling-off occurred in the insulating sheet after 1000 cycles, each cycle including leaving the insulating sheet to stand still at -40°C for 30 minutes and then at 150°C for 30 minutes, was confirmed. Those free of peeling-off or cracks were rated "A", those in which bubbles were generated in some part were rated "B", and those with peeling-off or cracks were rated "C". The evaluation results are indicated in Table 2.

### <Delamination test (4)>

Whether or not peeling-off occurred in the insulating sheet after being immersed in 85°C hot water for 840 hours was confirmed. Those free of peeling-off or cracks were rated "A", those in which bubbles were generated in some part were rated "B", and those with peeling-off or cracks were rated "C". The evaluation results are indicated in Table 2.

**[Table 2]**

| | | Example 1 | Example 2 | Example 3 | Example 4 | Example 5 | Example 6 | Example 7 | Example 8 | Example 9 | Example 10 | Comparative Example 1 | Comparative Example 2 | comparative Example 3 |
|---|---|---|---|---|---|---|---|---|---|---|---|---|---|---|
| Substrate film | | PPS | PPS | PPS | PI | PPS | PPS | LCP | PET | PPS | PPS | PPS | PPS | PPS |
| Resin layer | | Composition A | Composition B | Composition B | Composition A | Composition C | Composition E | Composition F | Composition D | Composition G | Composition H | Composition I | Composition J | Composition K |
| Bonding method | | (1) | (2) | (3) | (3) | (3) | (3) | (3) | (3) | (3) | (3) | (3) | (3) | (3) |
| Flame test | | A | A | A | A | A | A | A | A | A | A | A | A | A |
| Conductor adhesion strength (N/cm) | | 10.3 | 10.5 | 10.0 | 10.5 | 0 | 9.1 | 8.5 | 0 | 9.9 | 8.8 | 10.9 | 8.1 | 4.2 |
| Delamination test | (1) | A | A | A | A | A | A | A | A | A | A | C | C | C |
| | (2) | A | A | A | A | A | A | A | A | A | A | A | C | A |
| | (3) | A | A | A | A | A | A | A | A | A | A | C | C | C |
| | (4) | B | B | A | A | A | A | A | A | A | A | A | C | A |

As indicated by Table 2, excellent heat resistance and flame retardance were observed in Examples 1 to 10 in which the compositions A to H, which contained a thermoplastic polyurethane elastomer having a Shore A hardness of 80 or more, were used to form resin layers. In particular, it is clear that these examples have superior heat resistance since peeling-off, cracks, bubbles, etc., did not occur despite being left at a temperature as high as 150°C for as long as 3000 hours and despite being put under cycles that involve a significantly large change in temperature ranging from -40°C to 150°C.

In Examples 1 to 4, 6, 7, 9, and 10 which used the compositions A, B, and E to H containing a copolyester, the adhesion strength to the conductors was also excellent.

When Examples 1 and 4 in which the resin layer was formed by using the same composition are compared, and when Examples 2 and 3 in which the resin layer was formed by using the same composition are compared, bubbles occurred between the substrate film and the resin layer in the delamination test (4) in Examples 1 and 2, but not in Examples 4 and 3. This shows that since the substrate film and the resin layer were stacked by a dry lamination method (3), the heat resistance was improved. In other words, an adhesive is preferably present between the substrate film and the resin layer.

### Reference Signs List

1 insulating sheet
2 substrate film
3 resin layer
4 conductor

## Claims

1. An insulating sheet comprising:
a substrate film having insulation; and
a resin layer stacked on a first surface side of the substrate film,
wherein:
the resin layer contains a resin component that contains a thermoplastic polyurethane elastomer as a main component, and a flame retardant,
the thermoplastic polyurethane elastomer has a shore A hardness referring to the hardness measured with a type-A durometer in accordance with JIS-K 7311 (1995) of 80 or more,
an amount of the flame retardant contained relative to 100 parts by mass of the resin component is 40 parts by mass or more and 100 parts by mass or less,
the resin component in the resin layer contains a copolyester, and an amount of the copolyester in the resin component is 1 mass% or more and 50 mass% or less,
the glass transition temperature (Tg) of the copolyester, referring to the midpoint glass transition temperature measured in accordance with JIS-K-7121 (2012), is -80°C or more and 50°C or less, and
the storage modulus of the resin layer, measured in accordance with of JIS-K 7244-4 (1999) under conditions of 150°C, a frequency of 10 Hz, and a strain of 0.08%, is 0.5 MPa or more and 500 MPa or less.

2. The insulating sheet according to Claim 1, wherein the copolyester is crystalline and has a melting point of 100°C or higher and 200°C or lower.

3. The insulating sheet according to Claim 1 or Claim 2, wherein the substrate film contains, as a main component, polyimide, polyphenylene sulfide, polyester, or a liquid crystal polymer.

4. The insulating sheet according to any one of Claims 1 to 3, wherein the resin layer contains an inorganic pigment.

5. A flat cable comprising:
a plurality of strip-shaped conductors arranged in parallel to one another; and
a pair of insulating sheets that cover both surfaces of each of the conductors and each include a resin layer in contact with the conductors, wherein:
at least one of the pair of insulating sheets is the insulating sheet according to Claim 1.

## Patentansprüche

1. Isolierfolie, umfassend:
einen Substratfilm mit einer Isolierung; und
eine auf einer ersten Oberflächenseite des Substratfilms geschichtete Harzschicht, wobei:
die Harzschicht eine Harzkomponente enthält, die ein thermoplastisches Polyurethanelastomer als eine Hauptkomponente und einen Flammhemmer enthält,
das thermoplastische Polyurethanelastomer eine Shore-A-Härte in Bezug auf die Härte, gemessen mit einem Typ-A-Durometer gemäß JIS-K 7311 (1995), von 80 oder mehr aufweist,
eine Menge des enthaltenen Flammhemmers in Bezug auf 100 Teile in Masse der Harzkomponente 40 Teile pro Masse oder mehr und 100 Teile pro Masse oder weniger beträgt,
die Harzkomponente in der Harzschicht einen Copolyester enthält und eine Menge des Copolyesters in der Harzkomponente 1 Massenprozent oder mehr und 50 Massenprozent oder weniger beträgt,
die Verglasungstemperatur (Tg) des Copolyesters in Bezug auf die Mittelpunkt-Verglasungstemperatur, gemessen gemäß JIS-K-7121 (2012), -80 °C oder mehr und 50 °C oder weniger beträgt, und
der Speichermodul der Harzschicht, gemessen gemäß JIS-K 7244-4 (1999) unter den Bedingungen von 150 °C, einer Frequenz von 10 Hz und einer Dehnung von 0,08 %, 0,5 MPa oder mehr und 500 MPa oder weniger beträgt.

2. Isolierfolie nach Anspruch 1, wobei der Copolyester kristallin ist und einen Schmelzpunkt von 100 °C oder höher und 200 °C oder niedriger aufweist.

3. Isolierfolie nach Anspruch 1 oder Anspruch 2, wobei der Substratfilm als eine Hauptkomponente Polyimid, Polyphenylsulfid, Polyester oder ein Flüssigkristallpolymer enthält.

4. Isolierfolie nach einem der Ansprüche 1 bis 3, wobei die Harzschicht ein anorganisches Pigment enthält.

5. Flachkabel, umfassend:
eine Vielzahl von streifenförmigen Leitern, angeordnet parallel zueinander; und
ein Paar von Isolierfolien, die beide Oberflächen von jedem der Leiter abdecken und jeweils eine Harzschicht in Kontakt mit den Leitern umfassen, wobei:
wenigstens eine des Paares von Isolierfolien die Isolierfolie nach Anspruch 1 ist.

## Revendications

1. Feuille isolante comprenant :
un film de substrat présentant une isolation ; et
une couche de résine empilée sur un premier côté de surface du film de substrat,
où :
la couche de résine contient un constituant de résine qui contient un élastomère de polyuréthane thermoplastique comme un constituant principal, et un agent ignifuge,
l'élastomère de polyuréthane thermoplastique présente une dureté Shore A en référence à la dureté mesurée avec un duromètre de type A selon JIS-K 7311 (1995) de 80 ou supérieure,
une quantité de l'agent ignifuge contenu par rapport à 100 parties en masse du constituant de résine est de 40 parties en masse ou supérieure et de 100 parties en masse ou inférieure,
le constituant de résine dans la couche de résine contient un copolyester, et une quantité du copolyester dans le constituant de résine est de 1 % en masse ou supérieure et de 50 % en masse ou inférieure,
la température de transition vitreuse (Tg) du copolyester, en référence à la température de transition vitreuse moyenne mesurée selon JIS K-7121 (2012), est de -80°C ou supérieure et de 50°C ou inférieure, et
le module de stockage de la couche de résine, mesuré selon JIS-K-7244-4 (1999) dans des conditions de 150°C, une fréquence de 10 Hz, et une contrainte de 0,08 %, est de 0,5 MPa ou supérieure et de 500 MPa ou inférieure.

2. Feuille isolante selon la revendication 1, dans laquelle le copolyester est cristallin et présente un point de fusion de 100°C ou supérieur et de 200°C ou inférieur.

3. Feuille isolante selon la revendication 1 ou revendication 2, dans laquelle le film de substrat contient, comme un constituant principal, du polyimide, poly(sulfure de phénylène), polyester, ou un polymère de cristal liquide.

4. Feuille isolante selon l'une quelconque des revendications 1 à 3, dans laquelle la couche de résine contient un pigment inorganique.

5. Câble plat comprenant :
une pluralité de conducteurs en forme de bande disposés parallèlement les uns aux autres ; et
une paire de feuilles isolantes qui recouvrent les deux surfaces de chacun des conducteurs et comprennent chacune une couche de résine en contact avec les conducteurs, dans lequel :
au moins une de la paire de feuilles isolantes est la feuille isolante selon la revendication 1.
